# EUROPEAN PATENT APPLICATION

(11) **EP 0 603 816 A1**
(43) Date of publication of application: **29.06.1994**
(21) Application number: 93120602.3
(22) Date of filing: 21.12.1993
(51) Int. Cl.: B07B 1/24, B07B 13/16, B65G 33/12

(54) **Sorter for grain**

(30) Priority: 23.12.1992 FI 925851
(71) Applicant: TUME OY, SF-14201 Turenki (FI)
(72) Inventor: Alaspää, Pekka, SF-14200 Turenki (FI)
(74) Representative: Richter, Bernhard, Dipl.-Ing.

(57) **Abstract**

The invention relates to a sorter for grain, comprising a substantially cylindrical sorting drum (1) including in an axially successive order substantially cylindrical screen meshes (2, 3), means (10, 11, 14, 15) for rotating the sorting drum (1) around its longitudinal axis, and a supply pipe (5, 6) for delivering grain to the screen meshes (2, 3) of the sorting drum. The position of the end of supply pipe (5, 6) opening near the internal surface of screen mesh (2, 3) is adjustable circumferentially of the drum by adjusting an angle (α) between the supply pipe (5, 6) and the vertical plane coinciding with the rotating axis of the drum. In addition, the distance of the end of supply pipe (5, 6) from the internal surface of drum (1) is adjustable.

## Description

There are various reasons for sorting the seeds of grain and other plants. The most common object of sorting is the cleaning of grain intended for sowing seed from major debris to prevent it from blocking the feed mechanisms of a sowing machine. At the same time, the sorting operation includes the removal of very small and e.g. broken grains whose sprouting from the ground could be weaker than the rest of the seeds.

Another highly common application of sorting is the mere removal of small seeds from a batch of grain. This is used for upgrading the quality of e.g. malting barley.

A third objective of sorting is based on the sorting according to the specific weight of seeds. This is necessary if a batch of seeds for some reason includes plenty of empty or foreign grains having a weight different from normal grains.

Since the sorters currently available on the market are quite expensive, such sorters can only be acquired for the largest farms and for contract work. The smaller-scale farmers are either forced to buy their sowing seed in a sorted condition or to carry their home-grown seeds away from the farm to the nearest suitable sorter for contract sorting. This involves a drawback of unnecessary, often even long-distance haulages, as well as mixing of seeding grain and a hazard of spreading waste oats from sorters operating on a contract basis, which are sizable installations and thus impossible to clean thoroughly between separate batches of seed.

Thus, there is a distinct need for a simpler sorter capable of sorting the seeding grains of a few farms so as to be ready for sowing. The same apparatus offers an extra benefit if it can be used for sorting small grains out of the batches of malting barley. Representatives of the conventional sorters on the market include appliances, provided with reciprocally vibrating screen systems and various intake and blow assemblies and intended for fixed installation. Over the recent years, new popularity has been gained by a drum type solution, which may include either coaxially or axially successively arranged, various cylindrical screens or sieves rotating around the axis thereof. The grains falling through various sieves are delivered to various locations. A similar type of sorters existed even before the second world war. For example, the book "Jordbruksmekanisering i Sverige under tre enkel" from 1989 describes a sorter from the latter part of the 19th century. A characterizing feature in all prior known sorters is that the amount of inflowing grain is not controlled by the sorter itself. A suitable amount of inflowing grain is adjusted by means of a separate conveyor or a throttle included in a pipe delivering grain to the sorter. For example, it is possible to throttle the flow of grain from a sorting silo fitted above the sorter, by means of a gate included in the bottom of said silo.

The throughput of grain is normally adjusted by just tilting a sorter or by simply regulating the amount of inflowing grain. These methods of regulation are simple but difficult to perform accurately and reliably. In a drum type of sorter, the sorting result suffers if the screens or sieves remain partially uncovered and, thus, the adjustment must be easy to perform, accurate, and reliable.

In the drum type of sorters presently on the market, the screen meshes are generally secured to a drum frame with various fastening links. The replacement of a mesh may be troublesome. In several appliances the screens are mounted coaxially. Especially in this case, the link-type fastening is inconvenient, particularly when replacing the inner screen. In addition, the inner and outer screens are not interchangeable with each other.

The appliances presently on the market are intended to be transported either by towing, which is typical for heavy equipment, or on a transport pallet. Hoisting such equipment e.g. on top of a pouring shaft or to the top section of a dryer for a pre-cleaning operation is difficult. The lighter appliances are basically lighter to hoist but the transport thereof from one farm to another has not been sufficiently planned as there are no suitable handling and fastening points.

In the sorters presently on the market, the rotation of a drum is generally effected by means of a geared engine. In view of the price and the adjustment of speed, it is more preferred to employ a belt or block chain transmission. In many applications, the engine comprises an electric motor whose speed control requires expensive frequency transformers.

An object of the invention is to provide a sorter which is itself capable of controlling the amount of inflowing grain, the latter being adjustable in a simple fashion.

This object is achieved on the basis of the characterizing features set forth in the annexed claim 1. The preferred features of the invention for regulating the amount are set forth in claims 2 and 3.

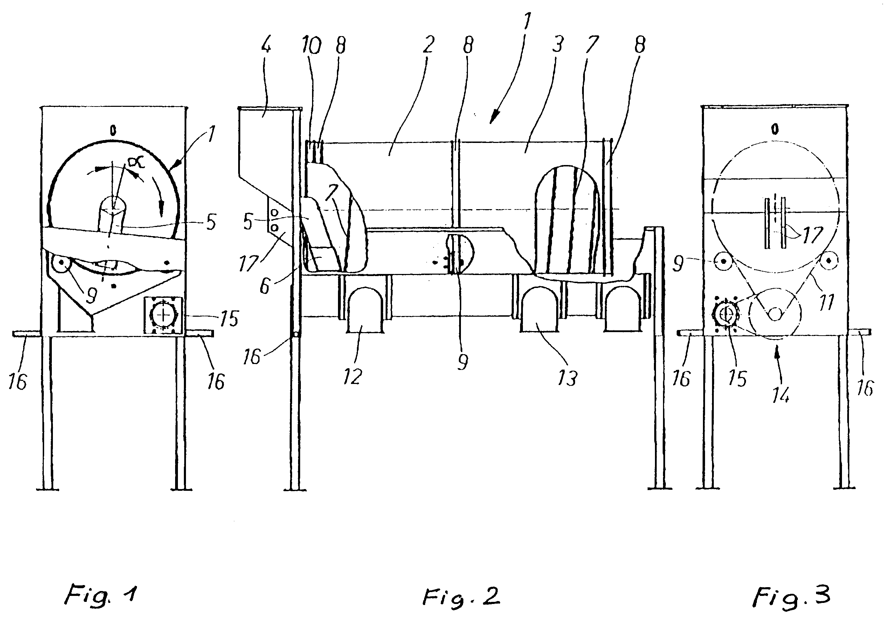

The invention will now be described with references made to the accompanying drawing, showing a sorter of the invention in a side and end view. The fig. 3 shows a view from left end of the fig. 2. The fig. 1 shows a view from right end of the fig. 2 (with the end plate partially cut off).

A sorter of the invention comprises a feed hopper 4 as well as a sorting drum 1 provided with cylindrical screen meshes 2 and 3 in successive order. Extending from the feed hopper 4 into the first sorting cylinder 2 is a supply pipe 5, whose distance or the distance of its extension 6 to the internal surface of sorting cylinder 2 can be adjusted. Also its angle of descent , especially in the projection seen in the axial direction of the sorting cylinders, can be adjusted. The distance and angular adjustment of pipe 5, 6 has an effect on the amount of inflowing grain. The internal surface of sorting cylinders 2, 3 is fitted with a spiral 7 conforming to the shape of a helical line for carrying grain forward in the cylinder and at the same time for supporting the screen meshes 2, 3 of the cylinder. The amount of grain to be carried is also subjected to the effect of the inclination of the machine. Drums 2, 7, 8 and 3, 7, 8 included in the sorter are interchangeable. With this arrangement, the sorting of malting barley and seeds can usually be effected with a total of 3-4 screens. One end of the cylinders is provided with an abutment ring 8, fastening to the next sorting cylinder 3 while also serving as a bearing surface for cylinder-supporting rollers (9). The first cylinder 2 is connected by a respective abutment ring 8 to a drive head 10, which serves as a pulley or a sprocket included in a secondary transmission and whereby the respective ring 8 is driven for rotating the sorting drum 1.

The above description is by no means intended to limit the invention precisely to what has been described. The sorting cylinders can also be constructed on a common shaft extending therethrough. The shaft can be either rotatable or the cylinders can be journalled on a fixed shaft for driving each other.

The grain poured inside cylinders 2 and 3 travels within the cylinders in a conventional fashion, dropping first the small grains from a spout 12, then the acceptable ones from a spout 13, and finally the large pieces of debris. By properly designing and providing the cylinders 2 and 3 with an equal mesh size, the cylinders can be made to discharge the small grains only and the larger ones will be discharged from the end of cylinders 2 and 3. This procedure is employed e.g. in the sorting of malting barley.

The end of supply pipe 5, 6 is located near the internal surface of cylinder 2, the bottom end of said supply pipe 5, 6 being buried within a material to be sorted and, as the machine is running, the supply pipe is full of material to be sorted. The material discharges in the pipe as a result of its flowing angle and other flowing characteristics. The discharge is intensified by the rotating motion of cylinder 2. The adjustment of the angle α of supply pipe 5, 6 has an effect on the resistance created for the discharge by the very material to be sorted and contained in cylinder 2. By adjusting a distance between the supply pipe outlet and the internal surface of cylinder 2 it is possible to reliably control the amount of grain discharging from the supply pipe. On the other hand, a dramatic increase of the angle α undermines the effect of the acceleration of gravity and, as the angle a reaches 90^{o}, the flow ceases completely.

Upon the rotation of cylinders 2, 3, the material supplied therein is displaced by the action of the rotating motion, the friction between cylinder and material, and the gravity to a certain radial position on the periphery of the cylinder. The angle existing between the centre of mass of a material in this position and the vertical plane is often close to said angle α. In other words, the variation of angle α can also be used for increasing or decreasing the anti-flowing effect on the mass contained in cylinder 2.

By virtue of the angular adjustment and distance adjustment of supply pipe 5, 6, it is possible to have a diversified effect on the flowing characteristics of a material without providing the supply pipe with a throttle that could easily block the supply pipe. The gap between the bottom end of supply pipe 5, 6 and the cylinder 2 does not develop blocks because the cylinder surface 2 is in motion. In addition, it is preferably possible to effect on the supply and discharge of a material in a manner that the spiral 7 is designed to extend into the space between the end of supply pipe 5, 6 and the cylinder 2.

The distance adjustment of the end of supply pipe 5, 6 is preferably effected in a manner that the extension 6 is shiftable in the axial direction of the supply pipe, whereby the edges of its outlet do not incline relative to the surface of cylinder 2 during the course of a distance adjustment.

The rotation of drum 1 is effected through the action of a belt or chain 11, engaging with the drive head 10 and driven by a motor 15 through a reduction gear 14.

The sorter can be coupled with the three-point lifting mechanisms of a tractor by means of journals 16 and a fastening bracket 17.

## Claims

1. A sorter for grain, comprising a substantially cylindrical sorting drum (1) including in axially successive order substantially cylindrical screen meshes (2, 3), means (10, 11, 14, 15) for rotating the sorting drum (1) around its longitudinal axis, and a supply pipe (5, 6) for delivering grain to said screen meshes (2, 3) of the sorting drum, **characterized** in that the position of the end of said supply pipe (5, 6) opening near the internal surface of the screen mesh (2, 3) is adjustable circumferentially of the drum by adjusting an angle (α) between the supply pipe (5, 6) and the vertical plane coinciding with the rotating axis of the drum.

2. A sorter as set forth in claim 1, **characterized** in that the distance of the end of said supply pipe (5, 6) from the internal surface of said drum (1) is adjustable.

3. A sorter as set forth in claim 2, **characterized** in that the end of the supply pipe (5, 6) is provided with an extension (6), which is shiftable in the axial direction of the supply pipe for said distance adjustment.

4. A sorter as set forth in any of claims 1-3, **characterized** in that the internal surface of the screen meshes (2, 3) is provided with a spiral (7), which extends into a space between the end of the supply pipe (5, 6) and the drum (1) and which carries grain forward within the drum (1).

5. A sorter as set forth in any of claims 1-4, **characterized** in that the relative order of the screen meshes (2, 3) can be reversed without having to remove the screen meshes from fastening frames (7, 8) holding them together.

6. A sorter as set forth in any of claims 1-5, **characterized** in that it is provided with fastening points (16, 17) which are compatible with the three-point lifting mechanism of a tractor.
